# EUROPÄISCHE PATENTSCHRIFT

(11) **EP 0 542 000 B1**
(45) Veröffentlichungstag und Bekanntmachung des Hinweises auf die Patenterteilung: **28.06.1995**
(21) Anmeldenummer: 92117967.7
(22) Anmeldetag: 21.10.1992
(51) Int. Cl.: B62B 5/06, B62B 3/02

(54) **Plattformwagen mit Schiebegriff**
Hand truck with handle
Diable avec manche

(30) Priorität: 11.11.1991 DE 9114069 U
(43) Veröffentlichungstag der Anmeldung: 19.05.1993
(73) Patentinhaber: Bielefelder Küchenmaschinen- und Transportgeräte-Fabrik vom Braucke GmbH, D-33739 Bielefeld (DE)
(72) Erfinder: vom Braucke, Manfred, W-4800 Bielefeld 15 (DE); vom Braucke, Hans, W-4973 Vlotho (DE)
(74) Vertreter: Strauss, Hans-Jochen, Dipl.-Phys., Dr.

(56) Entgegenhaltungen:
- CH-A- 475 121
- DE-C- 107 073
- DE-U- 8 706 428
- FR-A- 2 517 611
- GB-A- 932 114

## Beschreibung

Die Erfindung betrifft einen Plattformwagen mit an der Plattform befestigtem Schiebegriffbügel, gebildet von zwei je in ein Griffende auslaufenden Schubstangen, die mittels eines Querriegels zu dem Schiebegriffbügel verbunden sind, wobei der Querriegel in einem den Griffenden entsprechenden Abstand von den Enden der Schubstangen entfernt angeordnet ist, und die Griffenden zwei offene, im wesentlichen gerade Schubelemente ergeben, und wobei die Plattform auf ihrer Unterseite mit einem festen Radpaar und mindestens einer insbesondere nachlaufend lenkbaren Lenkrolle versehen ist.

Plattformwagen mit Schiebegriffen sind beispielsweise im betrieblichen Transportwesen hinreichend bekannt. Sie bestehen aus einer die Last aufnehmenden Plattform zur Aufnahme der zu transportierenden Last, unter der im allgemeinen zwei Radpaare angeordnet sind, von denen im Regelfall das an der dem Schiebegriff abgewandten Seite angeordnete Radpaar mit festen Bockrollen und das dem Schiebegriff zugewandten Seite angeordnete Radpaar von schwenkbaren, im allgemeinen nachlaufenden Lenkrollen gebildet werden. Damit können zwar die Lenkkräfte niedrig gehalten werden, jedoch wird die Manöverierfähigkeit stark eingeschränkt, ein Nachteil, der gerade in platzsparend eingerichten Lägern mit engen Gängen zu erheblichen Schwierigkeiten führt. Der Schiebegriff derartiger Plattformwagen, der zum Schieben, Ziehen und Lenken dient, der an der einen der beiden die Stirnseite bildenden Schmalseiten vorgesehen ist, ist als geschlossener Schiebegriffbügel ausgebildet; zum Bewegen des Plattformwagens wird dabei die horizontale Stange des Schiebegriffbügels benutzt, was im Hinblick auf die Krafteinleitung ungünstig ist. Auch lassen sich handgerechte Griffe nicht vorsehen, besonders weil das Rohr der Schiebegriffbügel aus statischen und weiteren Gründen im Durchmesser geringer gehalten werden kann, als einem haptisch optimalen Griffdurchmesser entsprechen würde; derartige Plattformwagen entsprechen nicht ergometrischen Erkenntnissen. Aus der DE 107 073 C ist ein Rollwagen bekannt, dessen Schiebegriff eingeklappt werden kann, wodurch ihre Aufbewahrung auch in einem kleinen Raum ermöglicht wird. Ungeachtet daß es sich hier nicht um einen Plattformwagen handelt, bleibt die ergometrische Ausformung der Schiebegriffe unberücksichtig. Die DE 8706428 U1 geht von einem zweirädrigen Transportkarren aus und betrifft lediglich dessen Handgriffe; danach soll die Ausbildung der Handgriffe so erfolgen, daß sie die Hände zu schützen in der Lage sind.

Die FR 2 517 611 A1 betrifft einen einem Plattformwagen ähnlichen Rollwagen, der dem Oberbegriff des Anspruchs 1 entspricht, mit einem an dem Rahmen der Ladeplattform befestigtem Schiebegriffbügel, gebildet von zwei je in ein Griffende auslaufenden Schubstangen, die mittels eines Querriegels zu dem Schiebegriffbügel verbunden sind, wobei der Querriegel in einem den Griffenden entsprechenden Abstand von den Enden der Schubstangen entfernt angeordnet ist, und die Griffenden zwei offene, im wesentlichen gerade Schubelemente ergeben, und wobei die der die Plattform bildende Rahmen auf seiner Unterseite mit einem festen Radpaar und mindestens einer insbesondere nachlaufend lenkbaren Lenkrolle versehen ist. Bei diesem Plattformwagen, der zur besseren Manöverierbarkeit mit einem festen und einem Lenkrollenpaar versehen ist, ist der Schiebebügel zwar schwenkbar an den Rahmen angelenkt und in verschiedenen Winkelstellungen festlegbar, jedoch bleiben die Griffe bogenförmig gegen die Fahrrichtung gebogen, so daß eine günstige Krafteinleitung erschwert ist.

Hier setzt die Erfindung an, der die Aufgabe zugrunde liegt, den eingangs angeführten bekannten Stand der Technik derart weiterzubilden, daß unter Beachtung einer verbesserten Ergometrie die Herstellung wirtschaftlicher und die Anwendung sicherer gemacht werden.

Diese Aufgabe wird nach der Erfindung dadurch gelöst, daß die die Handgriffe bildenden Griffenden der Schubstangen parallel zueinander in Schubrichtung weisend abgewinkelt sind, wobei die Winkel (α) geenüber der Senkrechten im Bereich von 40°-50° liegen. Diese Ausbilung ergibt einen Schiebegriffbügel mit überstehenden Handgriffen, die vom Bedienungsmann leicht gefaßt und geführt werden können, und bei dem die von dem Bedienungsmann aufzubringenden Kraft zum Bewegen des Plattformwagens günstig einleitbar ist, so daß der Plattformwagen leicht bewegt und gelenkt werden kann. Darüber hinaus ist ein Schieben, Ziehen und Führen des Plattformwagens auch über den Querriegel möglich. Diese Schubstangen können nun entsprechend den statischen Verhältnissen ausgelegt sein, da Griffstücke mit einem das Greifen begünstigenden Durchmesser einfach und ohne Schwierigkeiten auf diese überstehenden Handgriffe aufgesetzt werden können; ein Anpassen der Stangen-Durchmesser des Schiebegriffbügels an die günstigsten Griffdurchmesser, die zu einer Überdimensionierung dieser Stangen führt, entfällt. Dabei werden die die Handgriffe bildenden Griffenden der Schubstangen parallel zueinander in Schubrichtung weisend abgewinkelt, wobei die Winkel (α) gegenüber der Senkrechten im Bereich von 40°-50° liegen. Durch diese Abwinklung wird eine Stellung der die Handgriffe bildenden Enden der Schubstangen erreicht, die eine gute und sichere Kraftübertragung vom Bedienungsmann auf den Schubgriff erlaubt.

Ebenfalls vorteilhaft ist es, wenn die mit Handgriffen versehenen Griffenden der Schubstangen in Richtung der Wagenmitte, gegeneinander abgewinkelt sind, wobei die Winkel (β) gegenüber der Senkrechten im Bereich von 15°-30° liegen. Durch diese gegeneinander gerichtete Neigung werden die Hände des Bedienungsmannes aus einem Kollisionsbereich gebracht, der beim Begegnen zweier Plattformwagen gegeben sein könnte. Dabei sind die überstehenden Griffenden der Schubstangen vorteilhaft mit aufgesetzten Handgriffen, vorzugsweise aus Kunststoff versehen. Dabei können diese Griffe durch die Wahl des Materials so ausgebildet werden, daß diese im Hinblick z.B. auf ihre Oberfläche ein sicheres Greifen erlauben und im Hinblick auf ihre Temperaturleitfähigkeit ein angenehmes Gefühl vermitteln. Dazu werden diese Griffe aus Kunststoff hergestellt, wobei vorteilhaft die Herstellung durch Spritzgießen erfolgt. Vorteilhaft ist dabei ein von dem Griffende der Schubstange bzw. von dem aufgesetzten Griff ausgehender Handschutz vorgesehen, gebildet durch einen etwa in Verlängerung der Schubstange weisenden Steg, so daß dieser Steg den Griffbereich außen begrenzt. Darüber hinaus wird vorgeschlagen, daß der den Handschutz bildende Steg gegen den Handgriff am Ende der Schubstange abgestützt ist, so daß ein geschlossener Bügel gebildet ist. Auf diese Weise können die an den Griffen befindlichen Hände des Bedienungsmannes vor gefährlichen Kollisionen, wie sie beim Hantieren mit derartigen Plattformwagen immer wieder vorkommen, bewahrt werden.

Eine Ausführungsform, bei der die Schiebegriffbügel abnehmbar sind, sieht vor, daß die Schubstangen des Schiebegriffbügels Steckenden aufweisen, die in an der Ladeplattform vorgesehene Steckbuchsen einführ- und dort festsetzbar sind. Darüber hinaus wird vorgeschlagen, daß die Steckenden in den Steckbuchsen mittels Steckbolzen lösbar festsetzbar sind. Alternativ dazu wird vorgeschlagen, daß als Mittel zum lösbaren Festsetzen des Schiebegriffbügels schwerkraft- oder federbelastete Sperren, vorzugsweise als fallenähnliche Riegel ausgebildet, vorgesehen sind. Diese Ausführungsform eignet sich besonders zum Transport derartiger Plattformwagen, wenn auf eine Stapelbarkeit am Einsatzort kein Wert gelegt wird.

Bei einer anderen vorteilhaften Ausführungsform sind beide Schubstangen des Schiebegriffbügels an die Ladeplattform schwenkbar angelenkt, wobei die Anlenkung mit Mitteln zum Lösen und Festsetzen des Schiebegriffbügels versehen ist und wobei die Schwenkachse der Anlenkung vorzugsweise mindestens einen halben Durchmesser der Schubstangen über Ladeplattform- Oberkante liegt. Alternativ dazu sieht eine Variante vor, daß die beiden Schubstangen an der Außenseite der Ladeplattform befestigt sind. Mit dieser Befestigung können die umgelegten Schiebegriffbügel unter die Ebene der Ladeplattform hinaus geschwenkt werden, so daß die Höhe der Plattformwagen, etwa zum Transport auf das Maß der Höhe der auf den Rollen stehenden Ladeplattform verringert wird. Mit dieser Anlenkung wird die Möglichkeit geschaffen, den Schiebegriffbügel mit den überstehenden Handgriffen umzulegen, was ein Stapeln der Plattformwagen etwa beim Transport oder beim Magazinieren erlaubt.

Zum Sperren und Lösen wird vorgeschlagen, daß die Steckenenden in den Steckbuchsen mittels Steckbolzen lösbar festsetzbar sind; alternativ dazu wird vorgeschlagen, daß als Mittel zum lösbaren Festsetzen des Schiebegriffbügels feder- und/oder schwerkraftbelastete Sperren, vorzugsweise als fallenähnliche Riegel ausgebildet, vorgesehen sind. Auf diese Weise wird die Steckverbindung nach dem Stecken gesperrt bzw. vor dem Entnehmen des Schiebebügels gelöst; die Anlenkung wird nach Aufrichten zur Kraftübertragung zum Schieben gesperrt und zum Umlegen gelöst. Dabei genügt im Grundsatz ein Steckbolzen, der zum Sperren gesetzt und zum Entsperren gezogen wird. Vorteilhaft wird jedoch mit den feder- und/oder schwerkraftbelasteten Sperren gearbeitet, von denen einfache Rastverbindungen an sich schon genügen, fallenähnlich ausgebildete Sperren jedoch mehr Bedienungskomfort -etwa eine Bedienung mit Fußpedal oder Handzug- erlauben.

Im Zusammenwirken mit feder- und/oder schwerkraftbelasteten Sperren wird wird vorgeschlagen, daß daß zumindest eine der Schubstangen an ihrem der Anlenkung nahen und diese überragenden Ende ein abstehendes Bolzenende aufweist, das mit dem fallenähnlich ausgebildeten Riegel zusammenwirkt, der vorzugsweise mit einem Pedal zum Lösen bzw. Festsetzen versehen ist, wobei bei beidseits angeordneten Bolzenenden diese mittels eines Quergestänges miteinander verbunden sind. Der fallenähnlich ausgebildete Riegel weist dabei Mittel zum Erzeugen eines dem Lösen entgegen gerichteten Haltemomentes auf, das durch Feder- und/oder Schwerkraft erzeugt wird. Vorteilhaft sind die fallenähnlich ausgebildete Riegel beidseitig angeordnet, wobei bei beidseits angeordneten Bolzenenden diese mittels einer Arretierstange verbunden sind, das mit dem/Riegel/den über ein Quergestänge verbundenen Riegeln, die vorzugsweise mit einem Pedal zum Lösen bzw. Festsetzen versehen sind, zusammenwirkt. Als Mittel zum Entsperren werden vorteilhaft mechanische Mittel vorgesehen, die direkt vom Bedienungsmann mittels Fußauslösung oder Handzug bedient werden können.

Eine vorteilhafte Weiterbildung ist dadurch gegeben, daß die Riegel als Hebel ausgebildet sind und Riegel und/oder das Quergestänge Mittel aufweisen, die ein ein automatisches Sperren bewirkendes Gegenmoment erzeugen, wobei in eine Ausführungsform als das Gegenmoment erzeugende Mittel mit den Riegeln und/oder dem Quergestänge zusammenwirkende Federn vorgesehen sind. In einer alternativen Ausführungsform sind als das Gegenmoment erzeugende Mittel an den Riegeln und/oder dem Quergestänge Gegengewichte vorgesehen, wobei vorzugsweise das Quergestänge dieses Gegengewicht bildet. Diese Ausbildung, die besondere bei beidseitig angeordneten Riegeln vorteilhaft ist, weil beide Riegel über das Quergestänge miteinander verbunden sind und so mit einem Pedal oder einem Zug gleichzeitig auslösbar sind, wird in einfacher Weise eine Rückstellung des bzw. der ausgelösten Riegel erreicht durch ein Gegengewicht, das den als Hebel ausgebildeten Riegel bei Wegfall der das Auslösen bewirkenden Kraft aus gelöster Stellung in Sperrstellung zurückschwenken läßt.

Eine Weiterbildung ist dadurch gegeben, daß die Enden der Schubstangen unterhalb des Griffes V-förmig derart geformt sind, daß die beiden Spitzen des "V", die über einen Querriegel miteinander verbunden sind, gegen die Schubrichtung gerichtet sind, und daß die in Schubrichtung weisenden, um etwa 40°-50° abgewinkelten Handgriffe der Schubstangen die von Schubstangen und Querriegel gebildete Ebene nicht überragen. Vorteilhaft sind dabei die beiden Schubstangen innerhalb der Außenkanten der Ladeplattform an dieser befestigt. Durch diese Ausbildung können sich die Schubstangen voll auf die Ladeplattform auflegen und die abgewinkelten Griffenden bilden ein zu der Ladeplattform hin offenes "V". Bei dieser Ausführungsform kann in einfacher Weise eine Stapelbarkeit dadurch erreicht werden, daß unter der Ladeplattform mindestens ein Winkelstück derart vorgesehen ist, daß die zwischen den "V"-förmigen Ausformungen der Schubstangen vorgesehenen Querriegel bei den gestapelten Plattformwagen von dem Winkelstück aufgenommen wird, wobei vorzugsweise die Länge des Winkelstücks bzw. die Entfernung der Winkelstücke voneinander der Länge der Querstange zwischen den Schubstangen entspricht. Durch diese Ausbildung legt sich der zwischen den nach oben gerichteten Spitzen der "V"'s angeordnete Querriegel des unteren der gestapelten Plattformwagen in die Winkelstücke der jeweils darüber liegenden, so daß die Plattformwagen durch diesen Quasi-Formschluß fixiert sind. Dies gilt auch für seitliche Bewegungen, wenn die Winkelstücke der Länge der Querstangen entsprechen bzw. wenn bei zwei Winkelstücken deren Entfernung dieser Länge entspricht.

Eine alternative Möglichkeit der Stapelsicherung besteht darin, daß zwischen den Schubstangen weitere Querriegel derart vorgesehen sind, daß bei auf die Ladefläche der Ladeplattform aufliegendem Schiebegriffbügel diese Querriegel eine den griff-fernen Lenkrollen und/oder den griff-nahen festen Rollen entspricht. Alternativ dazu wird vorgeschlagen, daß zwischen den Schubstangen eine feste Stirnwand vorgesehen ist, in der nach einem weiteren Vorschlag Mulden und/oder Ausnehmungen derart vorgesehen sind, daß bei auf die Ladefläche der Ladeplattform aufliegendem Schiebegriffbügel diese Querriegel eine den griff-fernen Lenkrollen und/oder den griff-nahen festen Rollen entspricht. Mit diesen Querriegeln ist eine Möglichkeit gegeben, einen Stapel zu sichern, wenn die Lage der Querriegel so eingerichtet ist, daß die Lenkrollen und/oder die festen Rollen zwischen diesen Querriegeln sitzen und in ihrer Lage von diesen gehalten werden. Dabei erfüllen diese Querriegel auch im bestimmungsgemäßen Betrieb des Plattformwagens eine Sicherungsfunktion für die auf seiner Ladefläche befindlichen Ladung. Gleiches wird auch mittels der vorgeschlagenen Stirnwand erreicht, die zwischen den Schubstangen in der Ebene des Schiebegriffbügels vorgesehen ist, wobei Querriegel ebenso vorgesehen sein können, wie Mulden und/oder Ausnehmungen, die dann die die gestapelten Plattformwagen sichern, wobei es sich von selbst versteht, daß die Lage dieser Mulden und/oder Ausnehmungen der der Lenkrollen und/oder der festen Rollen entsprechen.

In bevorzugter Ausführungsform sind die festen Rollen griffseitig vorgesehen, und als Lenkrolle ist ein Paar vorzugsweise nachlaufender Lenkrollen griff-fern angeordnet sind. Dabei ist nach einem weitergehenden Vorschlag die Spurweite der Lenkrollen kleiner als die der festen Rollen, vorzugsweise um mindestens zwei Rollenbreiten. Mit dieser Verringerung der Spurweite der Lenkrollen wird zum einen eine Verbesserung der Manöverierbarkeit erreicht, die die Bedienung des Plattformwagens erreicht, die dessen Handhabung gerade in Magazinen und Lägern mit engen Gängen begünstigt. Zum anderen wird die Stapelbarkeit verbessert, besonderes wenn die lenkbaren Rollen zwischen den Griffen quasi "eingeklemmt" sind. Dabei liegt erfahrungsgemäß die freie Weite zwischen den Enden der gegeneinander geneigten Griffstücke so, daß eine Verringerung der Spurweite um je eine Radbreite auf jeder Seite ausreichend ist, um das Fixieren der Lenkrollen zu erreichen. Dabei versteht es sich von selbst, daß eine andere Geometrie der Griffenden andere Spurweiten-Verringerungen bedingen können. Diese Ausbildung erlaubt eine Radanordnung mit einem festen Bockrollenpaar im Bereich des Schiebebügels und dem Lenkrollenpaar an dem dem Schiebegriffbügel abgewandten Ende, da die bei dieser Anordnung aufzubringenden Lenkkräfte über die ergometrisch ausgerichteten Handgriffe ohne Schwierigkeiten aufgebracht werden können; auch ein schwer beladener Plattformwagen erhält damit bei frontseitig angeordneten Lenkrollen eine vorteilhafte Bewegbarkeit, seine Manöverierfähigkeit steigt.

In einer bevorzugten Weiterbildung sind die Ladeplattformen der aufeinander abgestellten Plattformwagen mit Ausnehmungen oder Griffmulden beidseits in der Ladeplattform etwa im Bereich der Schwerpunkt-Lage versehen. Um ein sicheres Aufsitzen zu erreichen, werden die einzelnen Ladeplattformen mit einer umlaufenden Kante versehen; auch können Mulden zur Aufnahme der Räder vorgesehen sein. Schließlich führt ein Feststellen zumindest eines der Radpaare zu einer Sicherung der gestapelten Plattformwagen, wobei eine derartige Feststellvorrichtung auch für den bestimmungsgemäßen Betrieb dieser Plattformwagen vorteilhaft ist.

Die Ladeplattform weist dabei zur Sicherung der Ladung vorteilhaft eine umlaufende, die Ladung gegen Abrutschen sichernde Kante auf. Diese Abrutschkante kann bei Vorliegen einer Schiebegriffbügel-Schwenkachse auf der Griffseite des Plattformwagens entfallen, da dann diese oberhalb der Ladeebene der Ladeplattform liegende, über die breite der Ladeplattform durchlaufende Schwenkachse die Funktion der Abrutschkante übernimmt. Zur Sicherung der Ladung wird nach einem weiteren Vorschlag vorteilhaft vorgesehen, daß die Oberseite der Ladeplattform mit einer rutschfesten Struktur versehen ist. Diese Ausbildung wird in einfacher Weise erreicht, wenn die Ladeplattform ein Kunststoff-Formteil ist. Dieses Kunststoff-Formteil kann dann auch in einfacher Weise mit den Ausnehmungen bzw. den Griffmulden zum Erleichtern des Stapelns versehen sein, und die Aufnahmen für die Radsätze und/oder die Mittel zur Anlenkung bzw. zum Einstecken des Schiebegriffbügels können in einfacher Weise ebenso angeformt, vorzugsweise gespritzt werden. Dabei werden die Bockrollen-Halterungen vorteilhafter Weise mit angespritzt; für das Anbringen der Lenkrollen werden Ausnehmungen vorgesehen, zur Aufnahme bzw. zum Einlegen der Obergurte der Lenkrollen.

Um den Plattformwagen einfach und platzsparend wegstellen zu können, ist der vordere Träger der Ladeplattform mit nach unten gerichteten Aufstell-Nasen versehen, die zumindest beidseits symmetrisch zur Mitten-Längsachse angeordnet sind. Diese Aufstell-Nasen erlauben es, den Plattformwagen etwa direkt am Arbeitsplatz nach dem Entladen vertikal aufzustellen, so daß er nicht unnötig Platz, der für Bewegungen am Arbeitsplatz oder für den allgemeinen Verkehr benötig wird, wegnimmt. Diese Nasen werden vorteilhaft vor den vorderen Lenkrollen angeordnet und dienen somit auch dem Schutz dieser Rollen. Dabei schließt die Symmetrie zur Längs-Mittenachse nicht aus, daß ein durchgehendes Aufstellblech vorgesehen ist. Eine geringfügige Kantung am freien Ende der Aufstell-Nasen bzw. des Aufstellbleches vereinfacht das Kippen des Plattformwagen beim Aufstellen. Der Kantwinkel ist dabei klein, er liegt im Bereich von 5° bis 15°.

Das Wesen der Erfindung wird beispielhaft an Hand der in den Figuren 1 bis 7 dargestellten Ausführungsformen beschrieben; dabei zeigen
- Fig. 1:: Eine schematische Perspektive eines Plattformwagens (mit angedeuteter Stapelung);
- Fig. 2:: Alternative Anordnungen der Schiebegriffbügels Fig. 2a: Außen angeordneter Bügel mit auf der Plattform aufliegenden Griffenden, Fig. 2b: Innen angeordneter Schiebegriffbügel mit auf der Ladeplattform aufliegenden Schubstangen mit Griffenden, Fig. 2c: Außen angeordneter, die Ladeplattform übergreifender Schiebegriffbügel;
- Fig. 3:: Seitansicht des Plattformwagens (mit angedeuteter Stapelung);
- Fig. 4:: Ansicht des Plattformwagens von der Schiebegriffbügel-Seite (abgebrochen) mit Gesperre für den Schiebegriffbügel;
- Fig. 5:: Einzelheit Schiebegriffbügel-Anlenkung, Frontansicht;
- Fig. 6:: Einzelheit Schiebegriffbügel-Anlenkung, Seitansicht;
- Fig. 7:: Einzelheit Griffausbildung.

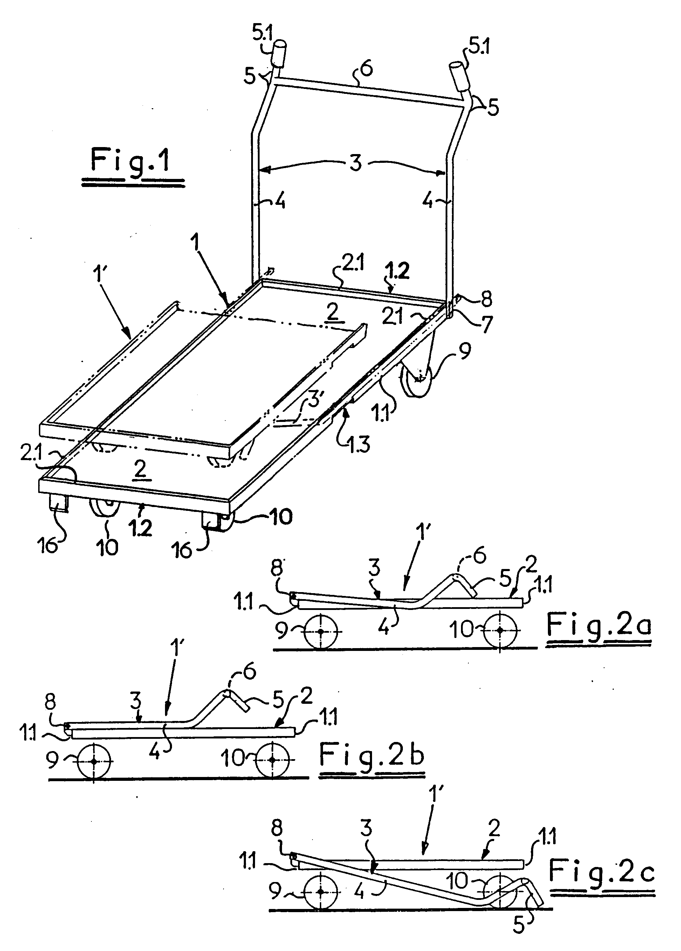

Die Figur 1 zeigt in schematischer Weise eine perspektivische Darstellung eines Plattformwagens 1 mit der Ladeplattform 2. Die Ladeplattform 2 ist in einen umlaufenden Rahmen 1.1 eingelegt, der mit in Querrichtung verlaufender Profilen 1.2 ausgesteift ist. Die Oberseiten der Querträger 1.2 liegen dabei in gleicher Höhe wie die Auflageflansche der Profile des umlaufenden Rahmens 1.1, wobei dessen überstehende Kante der Höhe entsprechen, die die in diesen Rahmen 1.1 eingelegte und von den Profilen 1.2 der Querträgern unterstützte Ladeplattform aufweist, so daß diese "bündig" eingelegt werden kann. Um ein Abrutschen der auf die Ladeplattform aufgelegten Ladung zu verhindern, wird die Ladeplattform 2 mit einer Abrutschkante 2.1 umgeben, die gesondert angesetzt, die jedoch auch von entsprechenden Überständen der Profile des umlaufenden Rahmens 1.1 gebildet sein kann. Frontseitig ist der Schiebegriffbügel 3 mit den Griffenden 5 angeordnet, der -entsprechend der gestrichelten Darstellung- umgelegt werden kann. Die Querträger 1.2 dienen dabei auch zur Aufnahme der Halterungen 9.1 für die Bockrollen 9 bzw. die Halterungen 10.1 der Lenkrollen 10. Dabei ist es vorteilhaft, wenn die Außenkanten dieser Rollen 9, 10 innerhalb des von dem Schiebegriffbügel 3 vorgegebenen lichten Maß liegen. Die Lenkrollen sind vorteilhaft mit einem um etwa ein bis zwei Rollenbreiten verringerten Radstand (Spurweite) angesetzt. Bei dieser Rollenanordnung wird das (in der Darstellung gestrichelt und abgebrochen dargestellte) Stapeln mehrerer Plattformwagen 1, 1' u.s.w. erleichtert.

Die Figuren 2 zeigen Plattformwagen 1 mit festen Rollen 9 und Lenkrollen 10, bei denen jeweils die Schiebegriffbügel 3 unterschiedlich an die Ladeplattform 2 angelenkt sind: Die Anlenkung des Schiebegriffbügels 3 in Fig. 2a ist außen vorgesehen. Beim Umlegen des Schiebegriffbügels 3 legt sich dieser mit seinen nach innen abgewinkelten Griffenden 5 auf diese Ladeplattform auf, wobei die mit den Griffen 5.1 versehenen Griffenden die Spurweite des beim Stapeln aufzusetzenden Plattformwagens 1 bestimmen. In der Fig. 2b ist die Anlenkung innerhalb der Ladeplattform 2 dargestellt. Hier liegen die Schubstangen 4 der Schiebegriffbügel 3 auf die Ladeplattform auf, wobei deren nach innen gerichtete Griffenden 5 nur dann mit dem freien Ende auf dieser Ladeplattform aufliegen, wenn Auslenkung und Rücklenkung der Griffenden einem gleichschenkligen Dreieck entsprechen. Die Fig. 2c zeigt eine Variante der Außen-Anlenkung nach Fig. 2a: hier ist jedoch die Länge des Schiebegriffbügels 3 derart, daß die Querstange 6 beim Umlegen der Schiebegriffbügels 3 über die Ladeplattform 2 weggeführt wird, so daß der Schiebegriffbügel 3 -etwa für Transportzwecke- auf der Aufstandsebene der Radpaare aufliegt.

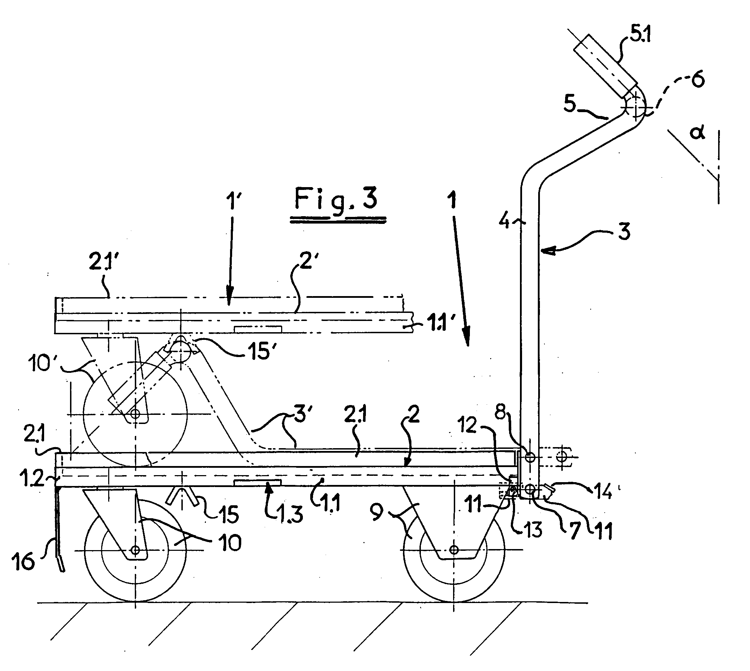

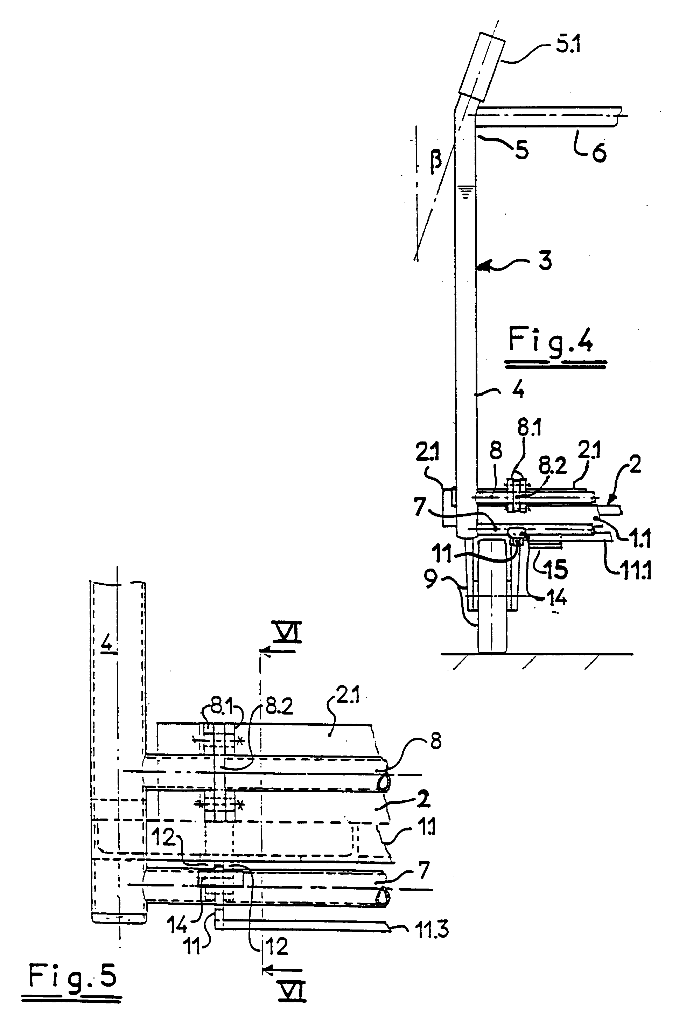

Die Figuren 3 und 4 zeigen teilweise abgebrochen eine Front- und eine Seitansicht des Plattformwagens 1: An dem bockrollenseitigem Ende des Plattformwagens 1 ist der Schiebegriffbügel 3 angeordnet. Dieser Schiebegriffbügel 3 wird von zwei Schubstangen 4 gebildet, deren freie Enden 5 zunächst entgegen der Schieberichtung und danach in Schieberichtung abgewinkelt sind, wobei zumindest die in Schieberichtung weisende Abwinklung (Winkel α) im Bereich von 40° bis 50° liegt. Diese Abwinklung ist für die Einleitung einer Schubkraft über die Handgriffe 5.1 ergometrisch vorteilhaft. Daher ist es bei der vorgeschlagenen Ausführungsform auch möglich, die Lenkrollen 10 in Schieberichtung vorlaufend anzuordnen, eine Anordnung, die dem Plattformwagen 1 eine sehr gute Manöverierfähigkeit verleiht. Das Griffende des umgebogenen Teils 5 der Schubstange 4 ist mit einem haptisch angenehmen Griffstück 5.1 versehen, so daß zum einen ein für die Kraftübertragung festes Anfassen erleichert wird, und zum anderen, die Rohrstärke der Schiebestangen nicht auf den im allgemeinen größeren Griffdurchmesser sondern allein auf die zur Kraftübertragung notwendige Statik abzustellen ist. Die beiden Schubstangen 4 sind über eine Querstange 6 miteinander verbunden, so daß diese beiden Schubstangen 4 zusammen mit der Querstange 6 einen Schiebegriffbügel 3 bilden, der nach oben und vorn weisende Handgriffe 5.1 aufweist, wobei diese Handgriffe 5.1 der üblichen Bewegung dienen, die Querstange 6 jedoch insbesondere zum Lenken und Manöverieren zur Verfügung steht.

Der Schiebegriffbügel 3 ist über eine querverlaufende Bügelachse 8 an den Rahmen 1.1 des Plattformwagens 1 angelenkt, wobei die Schwenkachse mindestens um einen halben Durchmesser der Schubstange 4 oberhalb der Auflageebene der Ladeplattform 2 liegt. Dadurch kann der Schiebegriffbügel 3 so umgelegt werden, daß er voll auf der Ladeplattform 2 aufliegt, abgesehen von dem abgewinkelten Teil 5, wobei hier deutlich wird, warum die Abwinklung zunächst entgegen der Schieberichtung und danach wieder in Schieberichtung erfolgt: Dadurch wird das vorbeschriebene, volle Auflegen zumindest des gestreckten Teils der Schubstangen 4 ermöglicht. Es versteht sich dabei von selbst, daß die umlaufende Abrutschkante 2.1 im Bereich dieser Schubstangen 4 ausgenommen ist, wobei auch ein Wegfall der gesamten Abrutschkante 2.1 an der Seite des Schiebegriffbügels 3 möglich ist, zumal die durchlaufende Bügelachse 8 die Abrutschkante in diesem Bereich zu ersetzen in der Lage ist.

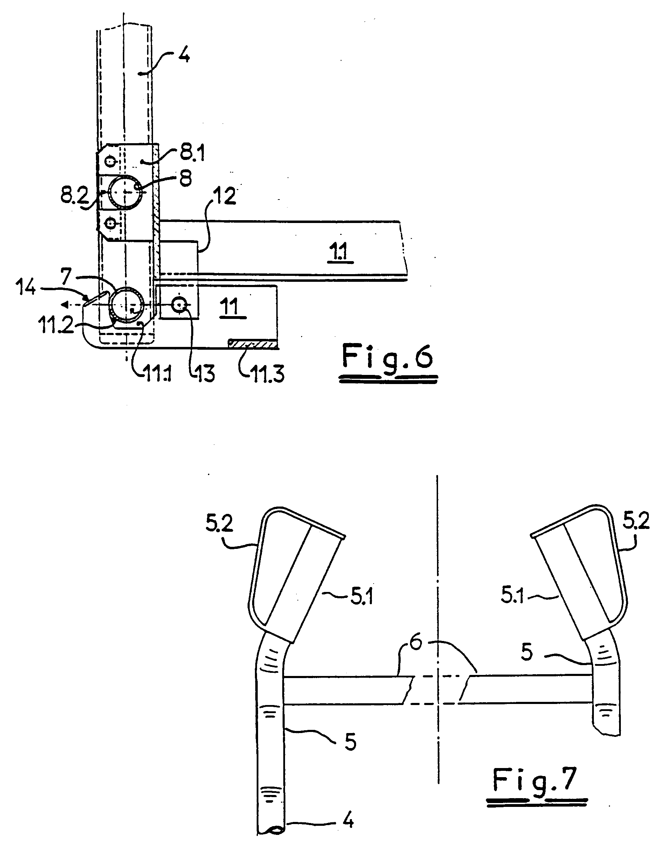

Zur Arretierung des aufgerichteten Schiebegriffbügels 3 ist eine in den Figuren 5 und 6 in Einzelheiten dargestellte Rastvorrichtung mit einer Klinke 11 vorgesehen, der in einem am Grundrahmen 1.1 befestigten Lager 12 um die Schwenkachse 13 schwenkbar angeordnet ist, wobei diese Klinke 11 mit einer Ausnehmung 11.1 zur Aufnahme der Raststange 7, die die beiden Schubstangen 4 miteinander an ihren dem Griffteil 5 entgegengesetzten Enden verbindet, versehen ist. Die in diese Ausnehmung 11.1 eingreifende Raststange 7 wird in der Klinke 11 während des Schiebens durch die Kraft, die beim Schieben des Plattformwagens 1 über die Schubstangen 4 auf deren Lagerungen an der Bügelachse 8 übertragen wird, form- bzw. kraftschlüssig gehalten, wobei sich die im Klinkenbereich befindlichen Enden der Schubstangen 4 gegen die Rückseitenfläche 11.2 der Klinke 11 abstützen mit einem auf die Rückseite der Ausnehmung 11.1 wirkendes Kraftmoment, wobei diese Rückseitenfläche 11.2 so ausgeformt ist, daß die Raststange 7 in der Ausnehmung um so fester gehalten ist, je größer die übertragenen Kräfte sind. Dazu weist die Rückseite der Ausnehmung eine Abschrägung oder eine Abrundung auf, wobei der Radius "R" der Abrundung vorteilhaft etwa im Bereich des 4-fachen des Radius der Raststange liegt. Die Klinke 11 selbst ist in einer Lagerung 12 mit einer Klinkenachse 13 gelagert, die ihrerseits gegen den umlaufenden Rahmen 1.1 abgestützt ist. Dabei ist die Höhenlage der Lagerung so, daß die Klinke 11 beim Entarretieren -beipielsweise mittels eines Trittes auf das Pedal 14- frei bewegbar ist, jedoch in ihrem Ausschlag durch die Unterseite der Ladeplattform 2 begrenzt ist. Das freie Ende der Klinke 11 wird vorteilhaft mit einem Gegengewicht versehen, das für die Rückstellung sorgt. Es erscheint selbstverständlich, daß dieses Gegengewicht auch durch eine die Rückstellung besorgende Feder ersetzt sein kann. Vorteilhaft werden zwei Klinken 11 vorgesehen, die über das als Gegengewicht wirkende Quergestänge 11.3 miteinander verbunden sind, so daß eine bügelähnliche Verbindung entsteht, wobei das Auslösen der Einzelklinke oder des Klinkenpaares über ein Pedal 14 erfolgt.

Schließlich zeigt die Figur 7 noch eine vorteilhafte Ausbildung des Griffstückes 5.1: Bei dieser Ausbildung ist ein Handschutzstück 5.2 vorgesehen, das gegen den Griff abgestützt ist, wodurch ein geschlossener Bügel entsteht. Dabei liegt das Handschutzstück 5.2 etwa in Verlängerung der Schubstange 4. Der gesamte Handgriff befindet sich daher in dem Profilumriß des Plattformwagens 1, überstehende Teile für den Handschutz werden vermieden.

Die vorgeschlagene Anordnung erlaubt ein Stapeln der Plattformwagen 1 (mit 1'in Figur 1 sowie in den Figuren 3 und 4 -teilgeschnittenangedeutet) bei umgelegten Schiebegriffbügeln 3: Die Radpaare finden dabei Platz auf der Oberseite des jeweils darunter befindlichen Plattformwagens, wobei ein geringerer Radstand der Lenkrollen 10 vorteilhaft ist, weil dann beim Stapeln der Plattformwagen 1 die nach innen gerichteten Handgriffe 5.1 diese Lenkrollen 10 zwischen sich nehmen können. Die Lenkrollen werden dadurch ausgerichtet und bei auf die offene Weite zwischen den Handgriffen 5.1 eines Schiebegriffbügels 3 abgestellten Spurweite auch von diesen fixiert. Die winkligen Griffstücke 5 erweisen sich bei diesem Stapeln mehrerer Plattformwagen 1, 1' ... als Hilfen zum Festlegen des Stapels. Zum Erleichtern des Aufsetzens sind an den Unterseiten der Ladeplattformen 2 der Plattformwagen 1, 1' ... Griffmulden, beispielsweise in Form von Ausnehmungen 1.3 vorgesehen, die in den Längsseiten etwa mittig angeordnet sind, so daß bei umgelegtem Schiebegriffbügel 3 das Gewicht auf beiden Seiten etwa das Gleiche ist und sich der Plattformwagen 3 beim Anheben im Gleichgewicht (oder nahe am Gleichgewicht) befindet. Um die gestapelten Plattformwagen 1, 1' ... sicher zu halten, wird an den Unterseiten der Ladeplattformen zweckmäßig beidseitig ein Winkelstück 15 (oder ein entsprechendes, durchgehendes Winkelprofil) so angeordnet, das es die Querstange 6 des umgelegten Schiebegriffbügels 3 übergreift, wodurch die zum Stapel aufgesetzten Plattformwagen 1, 1' ... u.s.w. so fixiert werden, daß der Stapel in sich fest ist. Eine weiter Möglichkeit, die ein platzsparenden Wegstellen erlaubt, ist durch die Aufstell-Nasen 16 gegeben; diese sind z.B. am Einsatzort vorteilhaft, wenn ein Plattformwagen 1 etwa zum Freigeben eines Transportweges nach dem Entladen den Durchgangsverkehr stört. In diesem Fall kann der Transportwagen 1 vertikal auf diese Nasen 16 gestellt werden, so daß er bei umgelegten Schiebebügel 3 nur wenig Stellfläche belegt. Diese Aufstell-Nasen können dabei so vor den vorderen Lenkrollen 10 angeordnet sein, daß durch sie auch ein Rollenschutz erreicht wird. Es versteht sich von selbst, daß diese hier beidseits dargestellten Nasen 16 als ein durchgehendes Aufstellblech ausgebildet sein können. Vorteilhaft ist es, wenn das freie Ende dieser Aufstell-Nasen 16 bzw. des Aufstellblechs in Richtung auf die Rollen leicht abgewinkelt sind. Dadurch läßt sich der Transportwagen 1 beim Aufstellen leichter bewegen.

## Patentansprüche

1. Plattformwagen (1) mit an der Plattform (2) befestigtem Schiebegriffbügel (3), gebildet von zwei je in ein Griffende (5) auslaufenden Schubstangen (4), die mittels eines Querriegels (6) zu dem Schiebegriffbügel (3) verbunden sind, wobei der Querriegel (6) in einem den Griffenden (5) entsprechenden Abstand von den Enden der Schubstangen (4) entfernt angeordnet ist, und die Griffenden (5) zwei offene, im wesentlichen gerade Schubelemente ergeben, und wobei die Plattform (2) auf ihrer Unterseite mit einem festen Radpaar (9) und mindestens einer insbesondere nachlaufend lenkbaren Lenkrolle (10) versehen ist, **dadurch gekennzeichnet**, daß die die Handgriffe bildenden Griffenden (5) der Schubstangen (4) parallel zueinander in Schubrichtung weisend abgewinkelt sind, wobei die Winkel (α) gegenüber der Senkrechten im Bereich von 40°-50° liegen.

2. Plattformwagen nach Anspruch 1, **dadurch gekennzeichnet**, daß Griffenden (5) der Schubstangen (4) gegeneinander abgewinkelt sind, wobei die Winkel (β) gegenüber der Senkrechten im Bereich von 15°-30° liegen.

3. Plattformwagen nach Anspruch 1 oder 2, **dadurch gekennzeichnet**, daß die Schubstangen (4) des Schiebegriffbügels (3) Steckenden aufweisen, die in an der Plattform (2) vorgesehene Steckbuchsen einführ- und dort festsetzbar sind, wobei Mittel zum lösbaren Festsetzen vorgesehen sind.

4. Plattformwagen nach Anspruch 1 oder 2, **dadurch gekennzeichnet**, daß die Schubstangen (4) des Schiebegriffbügels (3) an die Plattform (2) schenkbar angelenkt sind, wobei die Anlenkung mit Mitteln zum Lösen und Festsetzen des Schiebegriffbügels versehen ist und wobei die Schwenkachse (8) der Anlenkung vorzugsweise mindestens einen halben Durchmesser der Schubstangen (4) über Oberkante Plattform (2) liegt.

5. Plattformwagen nach Anspruch 3 oder 4, **dadurch gekennzeichnet**, daß als Mittel zum lösbaren Festsetzen des Schiebegriffbügels (3) mindestens ein Steckbolzen vorgesehen ist.

6. Plattformwagen nach Anspruch 3 oder 4, **dadurch gekennzeichnet**, daß als Mittel zum lösbaren Festsetzen des Schiebegriffbügels (3) feder- und/oder schwerkraftbelastete Sperren, vorzugsweise ausgebildet als fallenähnliche Riegel (11), vorgesehen sind.

7. Plattformwagen nach Anspruch 6, **dadurch gekennzeichnet**, daß zumindest eine der Schubstangen (4) an ihrem der Anlenkung nahen und diese überragenden Ende ein abstehendes Bolzenende aufweist, das mit dem fallenähnlich ausgebildeten Riegel (11) zusammenwirkt, der vorzugsweise mit einem Pedal (14) zum Lösen bzw. Festsetzen versehen ist, wobei die beidseits angeordneten Bolzenenden mit einer Arretierstange (7) miteinander verbunden sind, die mit dem Riegel (11)/den über ein Quergestänge (11.3) miteinander verbundenen Riegeln (11) zusammenwirkt.

8. Plattformwagen nach einem der Ansprüche 1 bis 7, **dadurch gekennzeichnet**, daß die überstehenden Griffenden (5) der Schubstangen (4) mit aufgesetzten Handgriffen (5.1) aus Kunststoff versehen sind, wobei vorzugsweise von dem Griffende (5) der Schubstange (4) bzw. von dem aufgesetzten Griff (5.1) ausgehend ein Handschutz vorgesehen ist, gebildet durch einen etwa in Verlängerung der Schubstange (4) weisenden Steg (5.2), so daß dieser Steg (5.2) den Griffbereich außen begrenzt.

9. Plattformwagen nach einem der Ansprüche 1 bis 8, **dadurch gekennzeichnet**, daß die Enden der Schubstangen (4) unterhalb des Griffes (5) derart V-förmig geformt sind, daß die beiden Spitzen des "V", die über den Querriegel (6) miteinander verbunden sind, gegen die Schubrichtung gerichtet sind, und daß die in Schubrichtung weisenden, um etwa 40°-50° abgewinkelten Handgriffe (5) der Schubstangen (4) die von Schubstangen (4) und Querriegel (6) gebildete Ebene nicht überragen.

10. Plattformwagen nach Anspruch 9, **dadurch gekennzeichnet**, daß unter der Plattform (2) mindestens ein Winkelstück (15) derart vorgesehen ist, daß die zwischen den "V"-förmigen Ausformungen der Schubstangen (4) vorgesehenen Querriegel (6) bei den gestapelten Plattformwagen (1, 1' ...) von dem Winkelstück (15) aufgenommen werden, wobei die Länge des Winkelstücks (15) bzw. die Entfernung der Winkelstücke (15) voneinander höchstens der Länge der Querstange (6) zwischen den Schubstangen (4) entspricht.

11. Plattformwagen nach einem der Ansprüche 1 bis 10, **dadurch gekennzeichnet**, daß zwischen den Schubstangen (4) weitere Querriegel (6.1, 6.2) derart vorgesehen sind, daß bei auf die Ladefläche der Plattform (2) aufliegendem Schiebegriffbügel (3) diese Querriegel (6.1, 6.2) mit den griff-fernen Lenkrollen (10) und/oder den griff-nahen festen Rollen (9) in Art von Bremsklötzen zusammenwirken.

12. Plattformwagen nach einem der Ansprüche 1 bis 11, **dadurch gekennzeichnet**, daß zwischen den Schubstangen (4) eine Stirnwand (4.1) vorgesehen ist, in der vorzugsweise Mulden und/oder Ausnehmungen (4.2) derart vorgesehen sind, daß bei auf die Ladefläche der Plattform (2) aufliegendem Schiebegriffbügel (3) diese Mulden und/oder Ausnehmungen mit den griff-fernen Lenkrollen (10) und/oder den griffnahen festen Rollen (9) in Art von Bremsklötzen zusammenwirken.

13. Plattformwagen nach einem der Ansprüche 1 bis 12, **dadurch gekennzeichnet**, daß die festen Rollen (9) griffseitig vorgesehen sind, und daß als Lenkrolle ein Paar vorzugsweise nachlaufender Lenkrollen (10) griff-fern angeordnet sind, wobei vorzugsweise die Spurweite der Lenkrollen (10) kleiner ist, als die der festen Rollen (9), vorzugsweise um mindestens zwei Rollenbreiten.

14. Plattformwagen nach einem der Ansprüche 1 bis 13, **dadurch gekennzeichnet**, daß die Plattform (2) beidseits im Bereich der Schwerpunkt-Lage in den Längs-Trägern des Rahmens (1.1) vorzugsweise muldenförmige Griff-Ausnehmungen (1.3) aufweist.

15. Plattformwagen nach einem der Ansprüche 1 bis 14, **dadurch gekennzeichnet**, daß die Plattform (2) eine umlaufende, die Ladung gegen Abrutschen sichernde Kante (2.1) aufweist.

16. Plattformwagen nach einem der Ansprüche 1 bis 15, **dadurch gekennzeichnet**, daß die Plattform (2) als Kunststoff-Formteil ausgebildet ist, vorzugsweise mit einer rutschfesten Struktur, beispielsweise mit Rauten oder Noppen versehenen Oberseite der Plattform (2).

17. Plattformwagen nach Anspruch 16, **dadurch gekennzeichnet**, daß die Rollen-Aufnahme für die Bock- und Lenkrollen (9, 10) an das Kunststoff-Formteil der Ladeplattform (2) angeformt ist, wobei vorzugsweise der Obergurt für die Lenkrollen-Aufnahme in das Formteil eingelegt ist.

18. Plattformwagen nach einem der Ansprüche 1 bis 17, **dadurch gekennzeichnet**, daß der vordere Träger (1.2) der Plattform (2) mit nach unten gerichteten Aufstell-Nasen (16) versehen ist, die zumindest beidseits symmetrisch zur Mitten-Längsachse angeordnet sind.

## Claims

1. Hand truck (1) with push-handle frame (3) fitted to the platform (2), the push-handle frame (3) comprising two pushing bars (4) each terminating in a gripping end (5) and these push-bars (4) being connected by a transverse bar (6) to form the handle (3), whereby the transverse bar (6) is arranged at a distance from the end of the bars (4) corresponding to the grips (5) and the grips (5) create two mainly straight pushing elements, and whereby the underside of the platform (2) is provided with a fixed pair of wheels (9) and at least one, steerable, in particular castor-like, steering roller (10), characterized in that the gripping ends (5) of the bars (4), forming the hand grips, running parallel, are angled towards the pushing direction at an angle (α) ranging 40°-50° relative to the vertical.

2. Hand truck (1) in accordance with Claim 1, characterized in that the gripping ends (5) of the bars (4), are angled away from each other at an angle (β) ranging 15°-30° relative to the vertical.

3. Hand truck (1) in accordance with Claim 1 or 2, characterized in that the bars (4) of the handle (3) have insertion ends which may be introduced into bushes provided on the platform (2), and can be secured there, whereby releasable securing means are provided.

4. Hand truck (1) in accordance with Claim 1 or 2, characterized in that the bars (4) of the handle (3) are articulated on the platform (2), whereby articulation includes means to release and secure the handle and whereby the axis (8) of articulation is located preferably at least half a diameter of the bars (4) above the upper edge of the platform (2).

5. Hand truck (1) in accordance with Claim 3 or 4, characterized in that at least one socket pin is provided for releasing and securing the handle (3).

6. Hand truck (1) in accordance with Claim 3 or 4, characterized in that spring- and/or gravity-loaded locks, preferably in the form of catch-like locks (11), are provided for releasing and securing the handle (3).

7. Hand truck (1) in accordance with Claim 6, characterized in that at least one of the bars (4) has a protruding bolt end at the end near to and rising above the articulation, which bolt end acts together with the catch-like lock (11) which is preferably provided with a pedal (14) for releasing and/or securing, whereby the bolt ends arranged on both sides are interconnected with a retention bar (7) which acts together with the lock (11) or the locks (11) interconnected via a transverse bar (11.3).

8. Hand truck (1) in accordance with one of Claims 1 to 7, characterized in that the projecting gripping ends (5) of the bars (4) are provided with plastic hand grips (5.1) over them, whereby hand protection is provided starting preferably from the gripping end (5) of the bar (4) and/or from the grip (5.1) on it, which hand protection is formed by a web (5.2) as an extension of the bar (4), so that the web (5.2) limits the gripping area on the outside.

9. Hand truck (1) in accordance with one of Claims 1 to 8, characterized in that the ends of the bars (4) are of such V-shaped form below the grip (5) that the two points of the "V", interconnected via the transverse bar (6), are facing towards the pushing direction, and that the grips (5) of the bars (4) angled at 40°-50° do not rise above the level created by the bars (4) and the transverse bar (6).

10. Hand truck (1) in accordance with Claim 9, characterized in that at least one elbow (15) is provided under the platform (2) in such a manner that the transverse bar(s) (6) provided between the V-shaped forms of the bars (4) is/are accommodated by the elbow (15) when the hand truck is stacked (1, 1' ...), whereby the length of the elbow (15) and/or the distance between the elbows (15) corresponds at the most to the length of the transverse bar (6) between the pushing bars (4).

11. Hand truck (1) in accordance with one of Claims 1 to 10, characterized in that further transverse bars (6.1, 6.2) are provided between the pushing bars (4) in such a manner that when the pushing handle (3) is resting on the loading surface of the platform (2), these transverse bars (6.1, 6.2) act together with the steering rollers (10) away from the grip and/or the fixed rollers (9) near to the grip in the manner of brake-chocks.

12. Hand truck (1) in accordance with one of Claims 1 to 11, characterized in that a face (4.1) is provided between the pushing bars (4), in which face preferably depressions and/or recesses (4.2) are provided in such a manner that when the pushing handle (3) is resting on the loading surface of the platform (2), these depressions and/or recesses act together with the steering rollers (10) away from the grip and/or the fixed rollers (9) near to the grip in the manner of brake-chocks.

13. Hand truck (1) in accordance with one of Claims 1 to 12, characterized in that the fixed rollers (9) are provided at the gripping end and that a pair of preferably castor-like steering rollers (10), as a steering means, are arranged away from the grip, whereby preferably the track width of the steering rollers (10) is smaller than that of the fixed rollers (9), preferably by at least two roller widths.

14. Hand truck (1) in accordance with one of Claims 1 to 13, characterized in that the platform (2) has preferably pit-like grip recesses (1.3) bilaterally in the longitudinal beams of the frame (1.1) in the region of the position of the centre of gravity.

15. Hand truck (1) in accordance with one of Claims 1 to 14, characterized in that the platform (2) has a peripheral edge (2.1) which ensures that the load does not slide off.

16. Hand truck (1) in accordance with one of Claims 1 to 15, characterized in that the platform (2) is in the form of a plastic mould, preferably with a slide-resistant structure, provided, for example, with lozenges or burls on the upper side of the platform (2).

17. Hand truck (1) in accordance with Claim 16, characterized in that the roller accommodating means for the fixed and steering rollers (9, 10) are integrally formed on the plastic mould of the loading platform (2), whereby preferably the upper belt for the steering-roller accommodating means is embedded in the mould.

18. Hand truck (1) in accordance with one of Claims 1 to 17, characterized in that the forward carrier (1.2) of the platform (2) is provided with resting lugs (16) directed downwards and arranged at least bilaterally symmetrically to the central longitudinal axis.

## Revendications

1. Chariot à plate-forme (1) comportant un arceau (3) de préhension et de poussée fixé à la plate-forme (2), constitué par deux barres de poussée (4) se terminant chacune par une extrémité de préhension (5) et qui sont reliées au moyen d'une barre transversale (6) pour former l'arceau (3) de préhension et de poussée, cette barre transversale (6) étant disposée à une distance des extrémités des barres de poussée (4) qui correspond aux extrémités de préhension (5), et ces extrémités de préhension (5) fournissant deux éléments de poussée ouverts, à peu près droits, et la plate-forme (2) étant pourvue, sur sa face inférieure, d'une paire de roues (9) fixes et d'au moins une roulette orientable (10) pivotante traînée, caractérisé en ce que les extrémités de préhension (5) des barres de poussée (4), formant les poignées, sont coudées en pointant parallèlement entre elles dans le sens de la poussée, les angles (α) par rapport à la verticale étant dans l'intervalle de 40° à 50°.

2. Chariot à plate-forme selon la revendication 1, caractérisé en ce que les extrémités de préhension (5) des barres de poussée (4) sont coudées l'une vers l'autre, les angles (β) par rapport à la verticale étant dans l'intervalle de 15° à 30°.

3. Chariot à plate-forme selon la revendication 1 ou 2, caractérisé en ce que les barres de poussée (4) de l'arceau (3) de préhension et de poussée présentent des extrémités enfichables qui peuvent être introduites dans des douilles prévues sur la plate-forme (2) et y être fixées, des moyens étant prévus pour permettre un verrouillage libérable.

4. Chariot à plate-forme, selon la revendication 1 ou 2, caractérisé en ce que les barres de poussée (4) de l'arceau (3) de préhension et de poussée sont articulées sur la plate-forme (2) de façon pivotante, l'articulation étant pourvue de moyens permettant de déverrouiller et de verrouiller l'arceau de préhension et de poussée, et l'axe de pivotement (8) de l'articulation se trouvant, de préférence, au moins à un demi-diamètre des barres de poussée (4) au-dessus du bord supérieur de la plate-forme (2).

5. Chariot à plate-forme selon la revendication 3 ou 4, caractérisé en ce qu'au moins un axe débrochable est prévu comme moyen de verrouillage libérable de l'arceau (3) de préhension et de poussée.

6. Chariot à plate-forme selon la revendication 3 ou 4, caractérisé en ce que des dispositifs de blocage chargés par ressort et/ou par gravité, constitués de préférence par des verrous du type loquet (11), sont prévus comme moyens de verrouillage libérable de l'arceau (3) de préhension et de poussée.

7. Chariot à plate-forme selon la revendication 6, caractérisé en ce qu'au moins une des barres de poussée (4) présente, à son extrémité proche de l'articulation et dépassant de celle-ci, une extrémité saillante formant goupille qui coopère avec le verrou (11) du type loquet,lequel est, de préférence, pourvu d'une pédale (14) de déverrouillage et de verrouillage, les extrémités d'axe disposées des deux côtés étant reliées entre elles par une barre d'arrêt (7) qui coopère avec le verrou (11) ou avec les verrous (11) reliés entre eux par une tige transversale (11.3).

8. Chariot à plate-forme selon l'une quelconque des revendications 1 à 7, caractérisé en ce que les extrémités de préhension (5) saillantes des barres de poussée (4) sont pourvues de poignées (5.1) emmanchées, en matière plastique, cependant qu'il est prévu un protège-mains partant de préférence de l'extrémité de préhension (5) de la barre de poussée (4) ou de la poignée (5.1) emmanchée, qui est constitué par une barrette (5.2) pointant à peu près dans le prolongement de la barre de poussée (4), de sorte que cette barrette (5.2) limite extérieurement la zone de prise.

9. Chariot à plate-forme selon l'une quelconque des revendications 1 à 8, caractérisé en ce que les extrémités des barres de poussée (4) sont constituées au-dessous de la poignée (5) en forme de V, de façon telle que les deux pointes du "V", qui sont reliées entre elles par la barre transversale (6), sont dirigées dans le sens inverse de la poussée, et que les poignées (5) des barres de poussée (4), pointant dans le sens de la poussée et coudées de 40° à 50° environ, ne dépassent pas au-delà du plan formé par les barres de poussée (4) et la barre transversale (6).

10. Chariot à plate-forme selon la revendication 9, caractérisé en ce qu'au moins une pièce coudée (15) est prévue sous la plate-forme (2), de façon telle que les barres transversales (6) prévues entre les formes en "V" des barres de poussée (4) sont reçues par la pièce coudée (15) lorsque les chariots à plate-forme (1, 1'...) sont empilés, la longueur de la pièce coudée (15), ou l'intervalle séparant les pièces coudées (15) les unes des autres, correspondant au maximum à la longueur de la barre transversale (6) disposée entre les barres de poussée (4).

11. Chariot à plate-forme selon l'une quelconque des revendications 1 à 10, caractérisé en ce que, entre les barres de poussée (4), d'autres barres transversales (6.1, 6.2) sont prévues de façon telle, que lorsque l'arceau (3) de préhension et de poussée repose sur la surface de chargement de la plate-forme (2), ces barres transversales (6.1, 6.2) coopèrent avec les roulettes orientables (10) éloignées des poignées et/ou avec les roulettes fixes (9) proches des poignées, à la manière de patins de freins.

12. Chariot à plate-forme selon l'une quelconque des revendications 1 à 11, caractérisé en ce que, entre les barres de poussée (4), une paroi d'extrémité (4.1) est prévue, dans laquelle des cuvettes et/ou des évidements (4.2) sont prévus de façon telle, que lorsque l'arceau (3) de préhension et de poussée repose sur la surface de chargement de la plate-forme (2), ces cuvettes et/ou évidements coopèrent avec les roulettes orientables (10) éloignées des poignées et/ou avec les roulettes fixes (9) proches des poignées, à la manière de patins de freins.

13. Chariot à plate-forme selon l'une quelconque des revendications 1 à 12, caractérisé en ce que les roulettes fixes (9) sont prévues du côté des poignées et qu'une paire de roulettes orientables (10), de préférence traînées, est disposée à distance des poignées pour servir de roulette orientable, l'écartement des roulettes orientables (10) étant de préférence inférieur à celui des roulettes fixes (9), de préférence inférieur d'au moins deux largeurs de roulette.

14. Chariot à plate-forme selon l'une quelconque des revendications 1 à 13, caractérisé en ce que la plate-forme (2) présente des deux côtés, dans la zone du centre de gravité, dans les longerons du châssis (1.1), des évidements de préhension (1.3), de préférence en forme de cuvette.

15. Chariot à plate-forme selon l'une quelconque des revendications 1 à 14, caractérisé en ce que la plate-forme (2) présente un rebord périphérique de sécurité (2.1) qui empêche la cargaison de glisser.

16. Chariot à plate-forme selon l'une quelconque des revendications 1 à 15, caractérisé en ce que la plate-forme (2) est constituée comme une pièce moulée en matière plastique, la face supérieure de la plate-forme (2) étant pourvue, de préférence, d'une structure antidérapante, par exemple de losanges ou de bossettes.

17. Chariot à plate-forme selon la revendication 16, caractérisé en ce que le support de roulettes pour les roulettes fixes et orientables (9, 10) est venu de moulage avec la pièce moulée en plastique de la plate-forme de chargement (2), la semelle supérieure prévue pour le support de roulettes étant de préférence noyée dans la pièce moulée.

18. Chariot à plate-forme selon l'une quelconque des revendications 1 à 17, caractérisé en ce que la poutre avant (1.2) de la plate-forme (2) est pourvue de béquilles d'empilement (16) dirigées vers le bas qui sont disposées au moins symétriquement des deux côtés par rapport à l'axe longitudinal central.
